Europäisches Patentamt

**European Patent Office**

**Office européen des brevets**

(11) Numéro de publication: **0 069 022**
**B1**

(12) # FASCICULE DE BREVET EUROPEEN

(45) Date de publication du fascicule du brevet:
19.03.86

(51) Int. Cl.⁴: **B 65 G 17/36**

(21) Numéro de dépôt: **82401213.2**

(22) Date de dépôt: **30.06.82**

(54) **Godet pour élévateur vertical.**

(30) Priorité: **01.07.81 FR 8112971**

(43) Date de publication de la demande:
**05.01.83 Bulletin 83/1**

(45) Mention de la délivrance du brevet:
**19.03.86 Bulletin 86/12**

(84) Etats contractants désignés:
**AT BE CH DE GB IT LI LU NL SE**

(56) Documents cités:
**FR - A - 2 453 799**
**US - A - 4 246 999**

(73) Titulaire: **SETEM SOCIETE D'ETUDES DE TECHNIQUE DE MANUTENTION, 40 rue du Drouillard, F-44620 la Montagne (FR)**

(72) Inventeur: **Tripoteau, Jean, 40, rue du Drouillard, F-44620 La Montagne (FR)**

(74) Mandataire: **Robert, Jean-Pierre et al, CABINET BOETTCHER 23, rue la Boétie, F-75008 Paris (FR)**

LIBER, STOCKHOLM 1986

## Description

La présente invention concerne un godet de manutention pour élévateur vertical.

On sait que le rendement d'un élévateur a godets dépend d'un grand nombre de facteurs tels que le nombre de godets au mètre d'élévateur, la vitesse de l'élévateur et surtout la forme du godet. On sait également qu'il n'est pas possible de multiplier le nombre de godets au mètre au-delà d'une certaine limite car, pour une projection horizontale donnée de l'ouverture du godet, ce dernier devient trop peu profond et ne se remplit pas convenablement. On sait enfin qu'il ne suffit pas de changer homothétiquement les dimensions d'un godet quelconque pour disposer d'une gamme. Les comportements des godets sont en effet differents selon leurs tailles et le rendement s'en trouve affecté ou pour le moins modifie.

Les principales recherches d'amélioration du rendement d'un élévateur n'ont cependant eu pour objet que la recherche d'un profil adapté à un meilleur chargement et déchargement du produit. C'est ainsi que le brevet US-A-4 246 999 décrit un godet pour élévateur vertical dont le profil intérieur a été déterminé pour obtenir un chargement et un déchargement satisfaisants. Bien qu'une partie centrale de ce godet possède un profil se rapprochant de celui de l'invention, il n'en reste pas moins que le godet proposé est un godet profond présentant les inconvénients connus de ces godets profonds à savoir un remplissage défectueux dû à la formation de poches d'air et un déversement en masse comportant un taux important de retombée du produit. En outre ce godet ne peut être adapté au débit à obtenir que par variation homothétique de ses dimensions pour conserver ses qualités, ce qui limite son emploi à des installations spécialement conçues pour le recevoir. L'équipement d'installations anciennes ne peut etre realisé que si les dimensions des godets anciens ont la même enveloppe que celle du godet proposé.

En revanche la présente invention est le fruit d'une longue recherche de forme, notamment en ce qui concerne le profil du godet, pour tenter de maîtriser les paramètres dimensionnels d'un godet permettant d'allier un nombre important de godets au mètre d'élévateur avec un bon remplissage et déchargement du godet ce, sur une plage de vitesses importante, et variant de manière simple en fonction des dimensions de godet souhaitées, sans affecter le rendement de l'élévateur. Le profil des godets selon l'invention constitue un optimum qui confère aux élévateurs équipés de tels godets un rendement très supérieur à celui des élévateurs classiques.

A cet effet l'invention a donc pour objet un godet pour élévateur vertical constitué par une paroi arrière destinée à être attelée à l'organe d'entraînement sans fin de l'élévateur, par une face avant formant le fond du godet en se raccordant à la face arrière et par deux faces latérales, dans lequel le profil de toute la section courante du godet perpendiculaire à sa paroi arrière est tel qu'une portion de ladite face formant fond du godet est constituée par un arc circulaire dont le centre est situé sur une droite formant un angle de 15 à 25° avec la face arrière.

Selon l'invention, ladite portion est la portion principale de la face avant et ledit arc circulaire est de longueur angulaire au moins égale à 50° dont au plus 25° sont situes entre ladite droite et ladite face arrière et dont du moins 25° sont situés de l'autre côté de ladite droite.

En outre. le plan d'ouverture du godet étant incliné par rapport à la paroi arrière d'un angle compris entre 75 et 80°, la distance séparant deux droites parallèles 3 cette ouverture et passant par les points d'extrémité de ladite portion circulaire correspond environ aux cinq sixièmes inférieurs de la profondeur de godet. Il est avantageux que la portion circulaire susdite se prolonge par une portion supérieure sensiblement droite inclinée d'environ 10° par rapport à la ligne de projection de l'extrémité supérieure de la portion circulaire susdite sur le plan d'ouverture et en direction de l'extérieur du godet.

Par ailleurs, l'extrémité inférieure de la portion circulaire susdite est soit reliée à la paroi arrière sur un faible rayon de raccordement soit reliée à la paroi arrière par une portion inférieure sensiblement droite parallèle au plan d'ouverture susdit terminée par un faible rayon de raccordement à la paroi arrière.

L'un des avantages de l'invention consiste en une méthode simple de détermination de la forme d'un godet et notamment du profil de son fond qui consiste à tracer deux droites parallèles distantes des cinq sixièmes de la profondeur susdite faisant un angle donné avec une droite de référence parallèle à la face arrière du godet à tracer une sécante de ces droites parallèles inclinée sur la droite de référence d'un autre angle donné, et à faire passer, par les points d'intersection de la médiatrice du segment de sécante interne aux parallèles avec lesdites parallèles, un arc de cercle d'angle au centre sensiblement égal à 50° et centré sur ladite sécante.

L'invention sera mieux comprise au cours de la description donnée ci-après à titre purement indicatif et non limitatif qui permettra d'en dégager les avantages et les caractéristiques secondaires.

Il sera fait référence aux dessins annexés dans lesquels

la figure 1 est un schéma du profil d'un godet selon l'invention; et

la figure 2 illustre les évolutions possibles du godet selon l'invention lors d'une augmentation de capacité.

En se reportant à ces figures, on voit la trace 1 de la paroi arrière plane du godet dans le plan de figure. Par cette paroi le godet est attelé à l'élément mobile sans fin (non represente mais pouvant être constitué par une ou deux chaînes, une courroie ou analogue) au moyen de boulons ou tout dispositif d'attelage équivalent. La paroi avant 2 qui forme le fond du godet en se raccordant à la paroi arrière 1 possède un profil circulaire dont le centre 0 est situé sur une droite 3 qui forme un angle A avec la direction de la paroi arrière 1. Cet angle peut être compris entre 15 et 25° et sera de préférence voisin de 20°. La longueur angulaire de ce profil circulaire 2 est au moins égale à 50° et dans la plupart des godets de petite dimension n'excèdera pas 50°. Cet angle est constitué par la somme des angles B et C (dans le cas de figure, égaux), l'angle B étant au plus égal à 25° et dans la pratique, compris entre 22 et 25° l'angle C étant au moins égal à 25° et dans la pratique pouvant atteindre 40° pour les godets de grandes dimensions.

Il est connu d'incliner le plan d'ouverture 4 du godet par rapport à l'horizontale. Cette inclinaison est définie par l'angle D que forme ce plan 4 avec la paroi arrière 1 du godet. Ainsi pour le godet décrit, cet angle D est compris entre 75 et 80° de manière que, lorsque la face arrière du godet est en position verticale, 1,incli-naison sur l'horizontale du plan 4 soit de 10 à 15° ce qui correspond sensiblement à l'angle que forme le talus naturel du produit véhiculé.

Tel que défini précédemment, le profil circulaire 2 est limité par deux points 5 et 6. Il faut que la distance a séparant les deux droites 7 et 8 parallèles entre elles et à la direction du plan d'ouverture 4 corresponde sensiblement aux cinq sixièmes de la profondeur du godet. Le point 6 constituant le fond du godet (c'est-àdire le point le plus bas lorsque la face arrière 1 est verticale) ces cinq sixièmes sont les cinq sixièmes inférieurs de la profondeur totale. Le dernier sixième b de cette profondeur est défini par une portion supérieure 9 de la face avant du godet prolongeant la portion circulaire 2. Cette portion 9 est de profil sensiblement linéaire. Sa direction est telle qu'elle forme un angle E d'environ 10° avec la ligne de projection orthogonale 10 du point 5 sur le plan d'ouverture 4, situé vers l'extérieur de l'ouverture du godet. On remarquera que le raccordement de cette portion 9 à la portion 2 se fait sous un angle G obtus qui ne sera pas supérieur à 180°. (L'angle G est pris entre la portion 9 et la tangente au point 5 de la portion

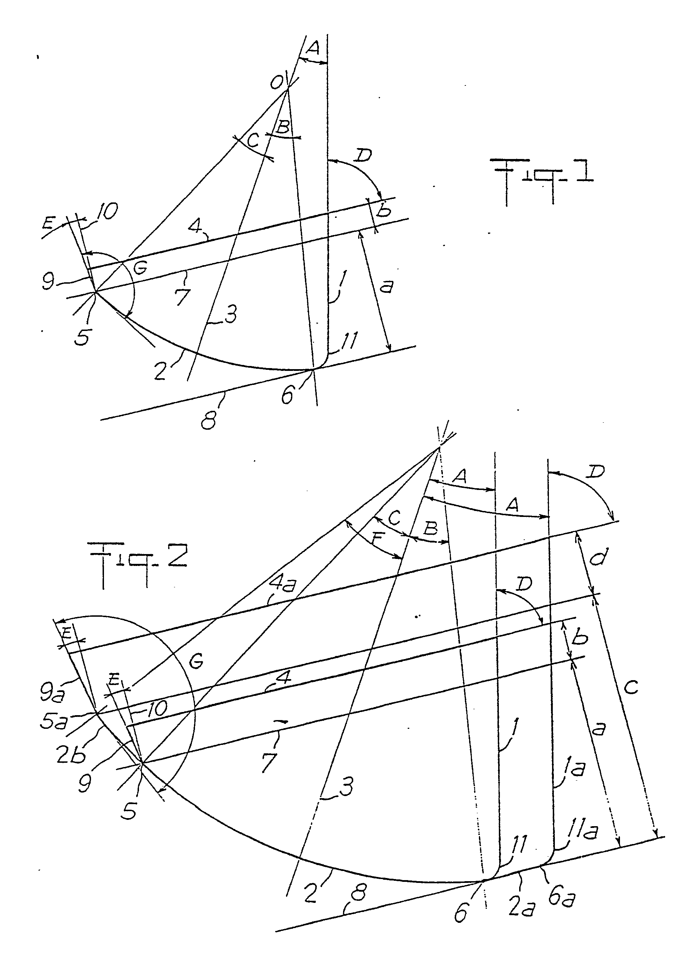

Enfin la figure 1 montre que la portion 2 se raccorde, au-delà du point 6 à la face arrière 1 au moyen d'une portion à faible rayon 11, ce rayon étant déterminé par la profondeur du godet a + b lorsque celui-ci est obtenu par emboutissage. On n'a pas représenté sur ces figures les parois latérales du godet qui pourront etre planes soit totalement à partir de l'ouverture, soit posséder une partie supérieure de configuration semblable à celle de la portion 9 susdite par rapport au plan de l'ouverture, ces parois latérales étant de préférence convergentes vers le fond du godet.

Le godet selon l'invention est ainsi parfaitement défini. L'un de ses premiers avantages réside dans la simplicité de son profil permettant une réalisation aisée de son outillage de fabrication tout particulièrement en emboutissage. La forme de sa face avant et de fond définie par les tronçons 9 et 2 assure à ce godet un bon remplissage lors de sa pénétration dans le produit en vrac au bas de l'élévateur et une bonne retenue du produit lors du déversement dans le haut de ce dernier. On a en effet constaté que le godet selon l'invention se comporte au remplissage comme un outil de coupe, le produit étant "tranché" par le bord 9 puis "s'enroulant" sur le tronçon 2 sans rupture à la manière d'un copeau continu. Cette disposition permet d'éviter les rebonds du produit sur le fond de godet qui nuisent au remplissage et surtout de supprimer toute vibration qui serait engendrée par le choc du produit dans le godet. Il en résulte une meilleure tenue de l'ensemble de l'élévateur et une moindre usure. Au moment du déversement, le godet tournant autour de la roue superieure de l'élévateur, la portion 9 susdite constitue un élément de retenue du produit pour contrarier sa tendance à échapper du godet trop tôt. La hauteur et l'angle de cette portion sont à cet égard des paramètres importants et les valeurs qui leur ont été attribuées ci-dessus sont un compromis optimal pour assurer et cette fonction de retenue et la fonction de pénétration dans le produit en vrac au pied de l'élévateur.

La forme du godet selon l'invention telle qu'elle est définie a pour conséquence importante une méthode de détermination du profil optimal d'un godet, destiné notamment à être implanté sur une installation de caractéristiques données.

L'une de ces caractéristiques réside dans le débit souhaité de l'élévateur qui, pour une vitesse donnée, est déterminé par la projection de l'ouverture des godets sur un plan horizontal et le nombre de godets à implanter sur une longueur unitaire de l'élé-vateur. On voit donc que ce débit détermine directement la profondeur du godet. A partir de cette seule donnée, l'invention permet de déterminer rapidement le godet optimal pour répondre à la demande.

En effet, il suffit de tracer, connaissant a + b donc a et b, les deux droites 7 et 8 formant un angle D connu avec la verticale. On trace ensuite la droite 3 faisant l'angle A avec la verticale. Cette droite 3 est sécante des droites 7 et 8 qui y déterminent un segment dont on prend la médiatrice. Cette médiatrice coupe chacune des droites 7 et 8 aux points 5 et 6. Il suffit alors de tracer l'arc de cercle passant par les points 5 et 6 d'angle au centre 50° et centré sur la droite 3 pour avoir la portion 2 que l'on prolongera d'une part par la portion 11 et d'autre part par la portion 9. Elevant la verticale 11 et traçant le plan 4, le profil du godet sera défini.

On pourra ensuite adapter ce premier tracé de manière à ajuster exactement la capacité du godet à celle désirée comme le montre la figure 2. On retrouve sur cette figure les éléments décrits précédemment avec les mêmes références.

C'est ainsi que l'on peut augmenter la capacité du godet sans en changer la hauteur (a + b) en déplaçant le point 6 vers l'extérieur (en 6a). La portion 2 se prolongealors par une portion plane 2a parallèle au plan d'ouverture 4, elle-même raccordée à la paroi arrière la par une partie de raccordement lla semblable à la partie 11. Ce godet, d'une ouverture plus importante possède les mêmes qualités techniques que le godet de la figure 1 tout en étant mieux adapté à certains types de produits tels que de la matière colmatante.

On peut également augmenter la hauteur (profondeur) du godet (c + d) en prolongeant au-delà du point 5 le profil 2 (jusqu'au point 5a). L'angle au centre de la portion 2b de prolongation du profil 2 est tel que, ajouté à l'angle C de 25°, il forme un angle F pouvant atteindre 40°. Les cinq sixièmes de la profondeur du godet sont alors représentés par la distance c, le godet se prolongeant au-delà du point 5a en une portion 9a ayant les mêmes caractéristiques géométriques que la portion 9 ci-dessus décrite.

L'ouverture du godet est alors située en 4a sa face arrière étant la face 1 prolongée vers le haut ou la face la. On voit que sur ce schéma on peut faire varier dans de larges proportions le tracé initial du godet sans en modifier les caractéristiques de comportement. A ces possibilités il faut enfin ajouter la variation strictement homothétique du godet. On peut par ces procédés adapter le godet au produit et à l'installation, tout en lui conservant ses qualités essentielles.

L'invention trouve une application intéressante dans le domaine de la manutention.

**Revendications**

1. Godet pour élevateur vertical constitué par une paroi arriere (1) destinée à être attelée à l'organe d'entraînement sans fin de l'élévateur, par une face avant (2, 9) formant le fond du godet en se raccordant à la face arriere (1) et par deux faces latérales, dans lequel le profil de toute la section courante du godet perpendiculaire à sa paroi arriere est tel qu'une portion (2) de ladite face formant fond du godet est constituée par un arc circulaire dont le centre (0) est situé sur une droite (3) formant un angle (A) de 15 à 25° avec la face arriere (1), caractérisé en ce que ladite portion (2) est la portion principale de la face avant (2, 9) et en ce que ledit arc circulaire est de longueur angulaire (B + C) au moins égale à 50° dont au plus 25° (B) sont situés entre ladite droite (3) et ladite face arriere (1) et dont au moins 25° (C) sont situés de l'autre côté de ladite droite (3).

2. Godet selon la revendication 1, caractérisé en ce que, le plan d'ouverture (4) du godet étant incliné par rapport à la paroi arriere d'un angle (D) compris entre 75 et 80°, la distance (a) séparant deux droites parallèles (7, 8) à cette ouverture (4) et passant par les points (5, 6) d'extrémité de ladite portion circulaire (2) correspond environ aux cinq sixièmes inférieurs de la profondeur de godet.

3. Godet selon la revendication 2, caractérisé en ce que la portion circulaire (2) susdite se prolonge par une portion supérieure (9) sensiblement droite inclinée d'environ 10° (E) par rapport à la ligne de projection (10) de l'extrémité supérieure (5) de la portion circulaire (2) susdite sur le plan d'ouverture (4) et en direction de l,extérieur du godet.

4. Godet selon la revendication 3, caractérisé en ce que ladite portion supérieure (9) forme avec la tangente de ladite portion circulaire (2) au point (5) de raccordement un angle (G) au plus égal à 180°.

5. Godet selon l'une quelconque des revendications précédentes, caractérisé en ce que l'extrémité inférieure (6) de la portion circulaire susdite est reliée à la paroi arrière (1) sur un faible rayon de raccordement (11).

6. Godet selon l'une quelconque des revendications 1 à 4, caractérisé en ce que l'extrémité (6) inférieure de la portion circulaire (2) susdite est reliée à la paroi arrière (1) par une portion inférieure (2a) sensiblement droite parallèle au plan d'ouverture (4) susdit terminée par un faible rayon de raccordement (11a) à la paroi arrière (1).

7. Godet selon la revendication 1, caractérisé en ce que l'angle (A) que forme la droite (3) de centre de l'arc circulaire (2) avec la paroi arrière (1) du godet est égal à 20°.

**Claims**

1. Bucket for vertical elevator comprising a rear wall (1) designed to be attached to the endless driving member of the elevator, a front face (2, 9), forming the bottom of the bucket by joining up with the rear face (1) and two side faces, wherein the profile of any common cross section of the bucket perpendicular to its rear face is such that a portion (2) of said face forming the bottom of the bucket is constituted by a circular arc, the center of which is located on a straight line (3) forming an angle (A) of 15 to 25° with the rear face (1), characterized in that said portion (2) is the main portion of said front face (2, 9) and in that said circular arc is of angular length (B + C) at least equal to 50°, of which 25° at the most arc situated between said straight line (3) and said rear face (1) and of which 25° at least are situated on the other side of said straight line (3).

2. Bucket according to claim 1, characterized in that, the opening plane (4) of the bucket being inclined with respect to the rear wall by an angle (D) of between 75 and 80°, the distance (a) separating to straight lines (7, 8) parallel to said opening (4) and passing through the outermost points (5, 6) of said circular portion (2), corresponds to about five-sixths of the depth of the bucket.

3. Bucket according to claim 2, characterized in that said circular portion (2) is extended by a substantially straight upper portion (9) inclined by about 10° (E) with respect to the line (10) of projection of the upper end (5) of said circular portion (2) on the opening plane (4) and outwardly from the bucket.

4. Bucket according to claim 3 characterized in that said upper portion (9) forms with the tangent of said circular portion (2) at the jonction point (5) an angle (G) at the most equal to 180°.

5. Bucket according to anyone of preceding claims, characterized in that the lower end (6) of said circular portion is joined to the rear wall (1) over a small joining radius (11).

6. Bucket according to anyone of claims 1 to 4 characterized in that the lower end (6) of said circular portion (2) is joined to the rear wall (1) over a lower portion (2a) substantially straight, parallel to said opening plane (4) ending into a small joining radius (IIa) to the rear wall (1).

7. Bucket according to claim 1, characterized in that the angle (A) formed by the straight line (3) traversing the center of the circular arc (2) with the rear wall (1) of the bucket is equal to 20°.

**Patentansprüche**

1. Elevatorbecher für einen Vertikalelevator, mit einer Rückwand (1), die an einem endlosen Antriebsorgan des Elevators befestigbar ist, mit einer Vorderfläche (2, 9), die an die Rückwand (1) anschließt und den Becherboden bildet, und mit zwei Seitenflächen, wobei das von der Seite gesehene Profil des ganzen, sich zur Rückwand (1) senkrecht erstreckenden Becherteils so geformt ist, daß ein Abschnitt (2) der den Becherboden bildenden Fläche durch einen Kreisbogen gebildet ist, dessen Mittelpunkt auf einer Geraden (3) liegt, die einen Winkel (A) von 15 bis 25° mit der Rückwand (1) einschließt, dadurch gekennzeichnet, daß der genannte Abschnitt (2) der Hauptabschnitt der Vorderfläche (2, 9) ist, und daß der Kreisbogen eine Bogenlänge (B+C) von mindestens 50° hat, von der höchstens 25° (B) zwischen der Geraden (3) und der Rückwand (1) und zumindest 25° (C) auf der anderen Seite der Geraden (3) liegen.

2. Becher nach Anspruch 1, dadurch gekennzeichnet, dass bei einer Neigung der Ebene der Becheröffnung (4) gegenüber der Rückwand (1) um einen Winkel (D) zwischen 75 und 80° der Abstand (a) zwischen zwei zu der Becher-Öffnung (4) parallelen Geraden (7, 8), die durch die Endpunkte (5, 6) des Kreisbogen-Abschnitts (2) verlaufen, annähernd fünf Sechstel der Bechertiefe entspricht.

3. Becher nach Anspruch 2, dadurch gekennzeichnet, daß der Kreisbogen-Abschnitt (2) durch einen oberen, im wesentlichen geraden Abschnitt (9) verlängert ist, der um etwa 10° (E) gegenüber der Projektionslinie (10) des oberen Endpunktes (5) des Kreisbogen-Abschnitts (2) auf die Ebene der Becheröffnung (4) nach außen, bezogen auf den Becher, geneigt ist.

4. Becher nach Anspruch 3, dadurch gekennzeichnet, daß der obere Abschnitt (9) mit der Tangente des Kreisbogen-Abschnitts (2) am Verbindungspunkt (5) einen Winkel (G) von höchstens 180° bildet.

5. Becher nach einem der vorangehenden Ansprüche, dadurch gekennzeichnet, daß das intere Ende (6) des Kreisbogen-Abschnitts mit der Rückwand (1) über einen kleinen Anschlußradius (11) verbunden ist.

6. Bscher nach einem der Ansprüche 1 bis 4, dadurch gekennzeichnet, daß das untere Ende (6) des Kreisbogen-Abschnitts (2) mit der Rückwand (1) über einen im wesentlichen geraden und zur Becher-Öffnung (4) parallelen unteren Abschnitt (2a) verbunden ist, der an seinem Ende einen kleinen Anschlußradius (IIa) zu der Rückwand (1) aufweist.

7. Becher nach Anspruch 1, dadurch gekennzeichnet, daß der Winkel (A), den die den Mittelpunkt des Kreisbogens (2) tragende Gerade (3) mit der Rückwand (1) des Bechers einschliesst, gleich 20° ist.

Fig.1

Fig.2